Europäisches Patentamt

European Patent Office

Office européen des brevets

(19)

(11) Publication number: **0 235 415 B1**

## (12) EUROPEAN PATENT SPECIFICATION

(45) Date of publication of patent specification: **18.12.91**

(51) Int. Cl.⁵: **B25H 1/08, B25B 1/24, B25B 5/00, B25B 5/14**

(21) Application number: 86301389.2

(22) Date of filing: 26.02.86

(54) **Multi-position workbench.**

(43) Date of publication of application:
**09.09.87 Bulletin 87/37**

(45) Publication of the grant of the patent:
**18.12.91 Bulletin 91/51**

(84) Designated Contracting States:
**AT BE CH DE FR IT LI LU NL SE**

(56) References cited:
EP-A- 0 097 294    EP-A- 0 116 212
DE-A- 3 002 398    DE-A- 3 515 383
DE-B- 1 114 749    FR-A- 1 528 037
FR-A- 2 367 577    US-A- 2 646 101
US-A- 4 125 251    US-A- 4 489 925

(73) Proprietor: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

## Description

The present invention relates to workbenches and is particularly concerned with a workbench for the clamping of workpieces in different positions or orientations.

FR-A-1 528 037 describes a small clamp of a type used by, for example, jewellers, goldsmiths, and opticians for standing on a workbench and permitting a workpiece to be supported in a number of different positions. More particularly, a clamp according to the said French Patent comprises a base fitted with an upstanding leg which carried a single elongated support rod. A stock is mounted for sliding movement on the elongated support rod and a clamping device is, in turn, carried by the stock in such a manner as to permit swivelling movement of the clamping device relative to the stock.

Further document US-A-4489925 discloses a workbench comprising a frame including guide rail means, leg means, first and second means fixed on the guide rail means having a plurality of sockets oriented transversely to one another, each socket carrying a plurality of elongated support rods extending transversely to one another and removably secured in the sockets, whereby the elongate support rods carry clamping block means which are slidably adjustable thereon and which can be secured in a desired position on the elongate support rods by changing means.

It is an object of the present invention to provide a workbench for clamping irregularly-shaped workpieces in different positions or orientations.

Accordingly the present invention provides a workbench for holding a workpiece, said workbench comprising a frame including guide means, leg means, two stocks having a plurality of faces, whereby there is no plane which is at the same time normal to the planes defined by those faces and carried on the guide rail means, and means for displacing a movable one of said stocks towards and away from the other of said stocks, each stock having a socket or threaded hole formed on each of said faces and an elongate support rod removably secured in said socket or threaded hole whereby each support rod extends outwardly from a respective stock and whereby the elongate support rods can be disposed in a variety of positions relative to each other, the elongate support rods carry clamping block means which are slidably adjustable thereon and which can be secured in a desired adjusted position on the elongate support rods by changing means, whereby one of said stocks is fixed and has a plurality of such sockets or threaded holes which are oriented transversely to one another and which can carry a plurality of such elongate support rods extending transversely to one another from said stock.

The invention also includes a workbench for holding a workpiece, said workpiece comprising a frame including guide rail means, leg means, two stocks having a plurality of faces, carried on the guide rail means, and means for displacing a movable one of said stocks towards and away from the other of said stocks, each stock having a socket or threaded hole and an elongate support rod removably secured in said socket or threaded hole whereby each support rod extends outwardly from a respective stock and whereby the elongate support rods can be disposed in a variety of positions relative to each other, the elongate support rods carry clamping block means which are slidably adjustable thereon and which can be secured in a desired adjusted position on the elongate support rods by changing means; whereby one of said stocks is fixed and whereby each stock comprises a hub portion having a socket or threaded hole formed therein and carrying a rotatable portion having a further socket or threaded hole formed therein, the hub portion being slidable along said guide rail means and said rotatable portion being rotatable about an axis parallel to the solid guide rail means to enable the relative orientations of elongate support rods carried in said sockets or threaded holes to be varied.

The workbench according to the present invention differs, inter alia from the clamp of FR-A-1 528 037 in that at least one stock of the workbench has a plurality of sockets or threaded holes which are oriented transversely to one another and can carry a plurality of elongate support rods extending transversely to one another.

It will, therefore, be appreciated that a workbench according to the invention includes a movable stock which is displaceable relative to the fixed stock on guide means of the support structure with at least one support arm releasably engageable with the movable stock. Further, clamping jaws carried by the or each support arm permit angular and/or translational movement on the arm into positions such as to clamp a workpiece, either in association with the jaws on the support arm or arms of the fixed stock or independently thereof. A plurality of support arms with clamping jaws may be selectively engageable with the movable stock in different relative angular orientations.

The support arms may be engageable on spigots, threaded studs or the like carried by the fixed stock and/or the movable stock but in preferred embodiments are engageable in holders or threaded sockets in the fixed stock and/or movable stock. It will be appreciated, however, that other means of engagement of the arms on the stocks may be employed as appropriate.

The workbench according to the present invention has a greater degree of adjustability of the position and orientation of the clamping jaws than workbenches previously proposed and, therefore, has the operational flexibility which enables it securely to clamp irregularly-shaped workpieces.

The present invention will now be described, by way of example, with reference to the appended drawings, in which:

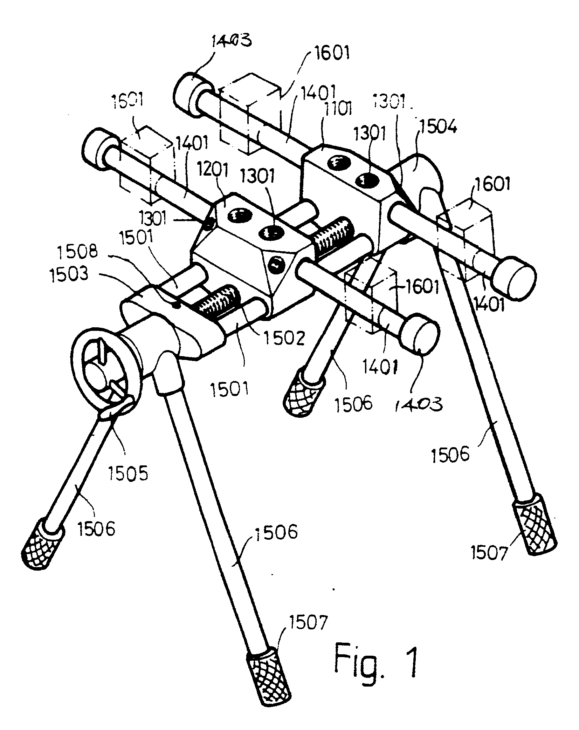

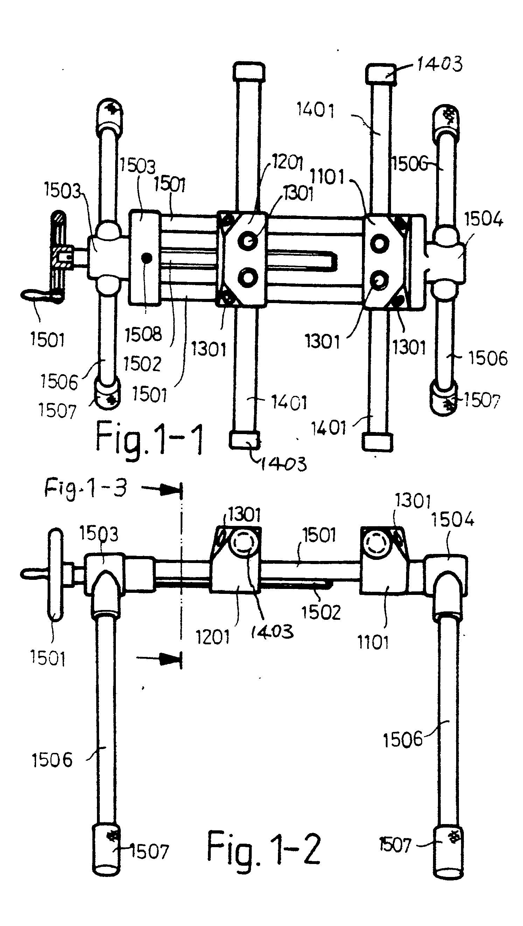

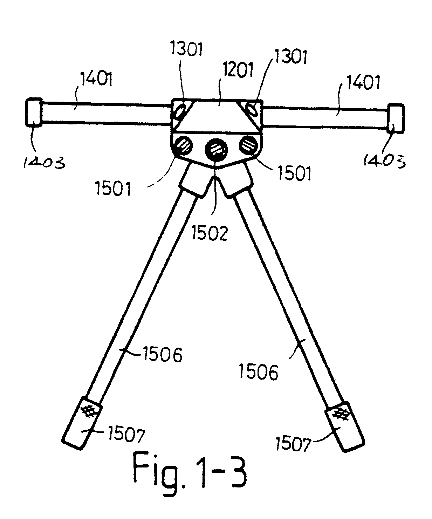

Figure 1 is a perspective view of a workbench according to a first embodiment of the present invention;

Figure 1-1 is a plan view of the embodiment of Figure 1;

Figure 1-2 is a side view of the embodiment of Figure 1;

Figure 1-3 is a cross-section along the line 1-3 of Figure 1-2;

Figure 2-20 is a scrap perspective view of a third embodiment of the workbench of the invention;

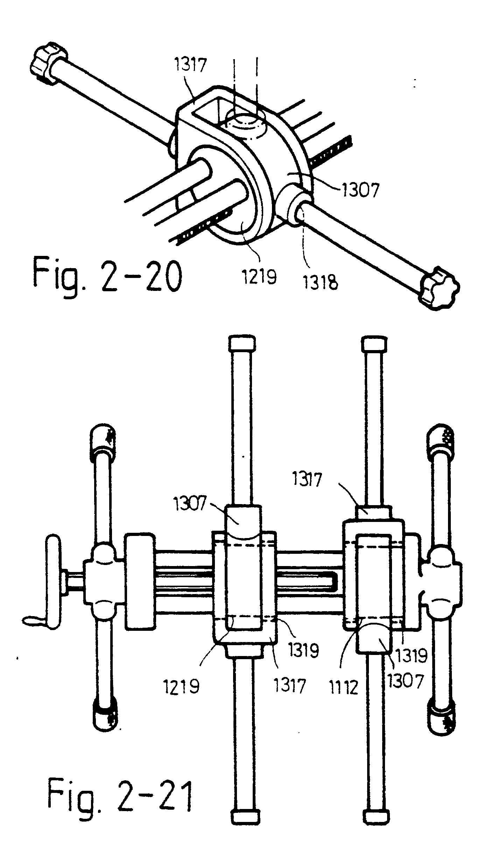

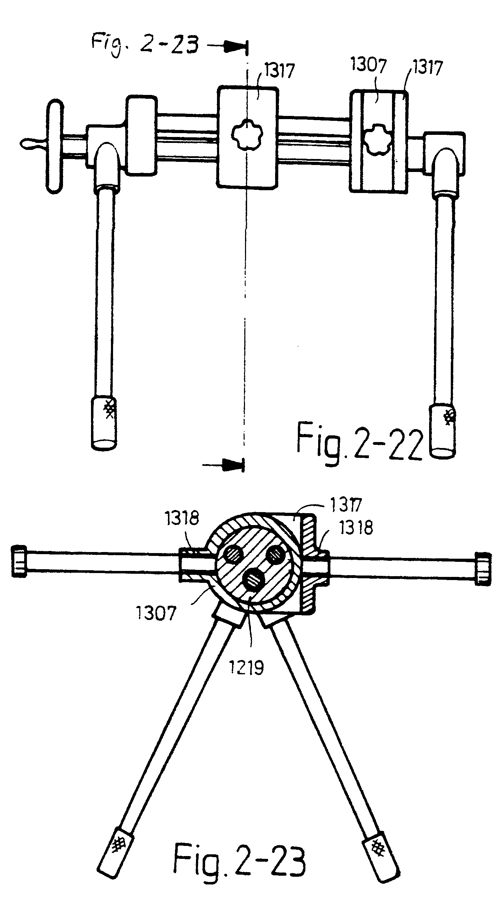

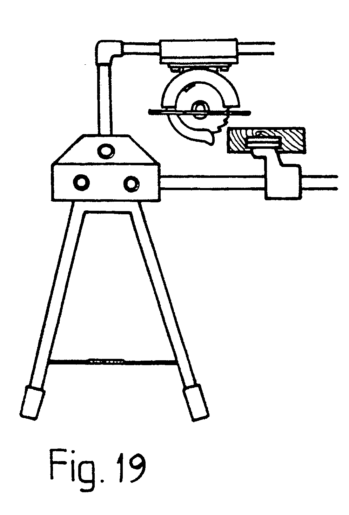

Figure 2-21 is a plan view of the embodiment of Figure 2-20;

Figure 2-22 is the side view of the embodiment of Figure 2-20;

Figure 2-23 is a cross-sectional view along the line 2-23 of Figure 2-22;

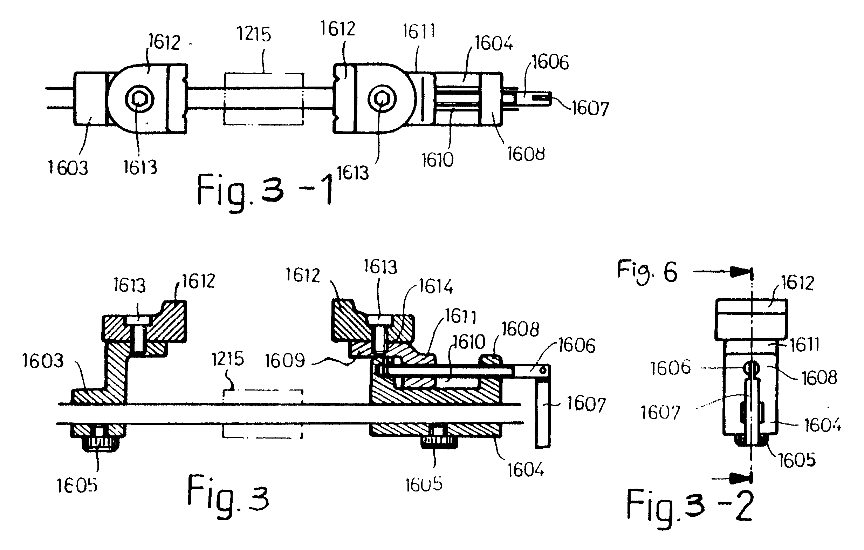

Figure 3 is a sectional view along the line 6 of Figure 3-2, showing a pair of clamping jaws for the workbench of the invention;

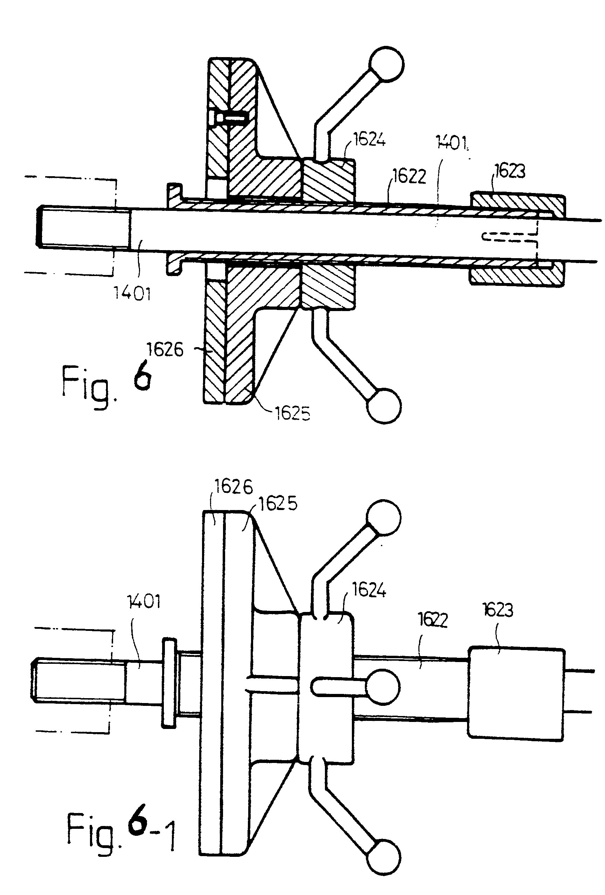

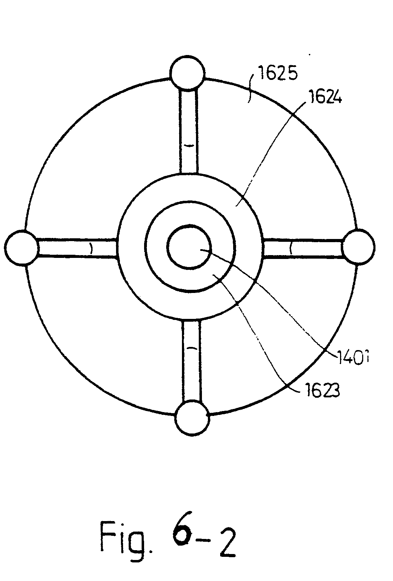

Figure 3-1 is a plan view of the clamping jaws of Figure 6;

Figure 3-2 is a view of the clamping jaws from the right of Figure 6;

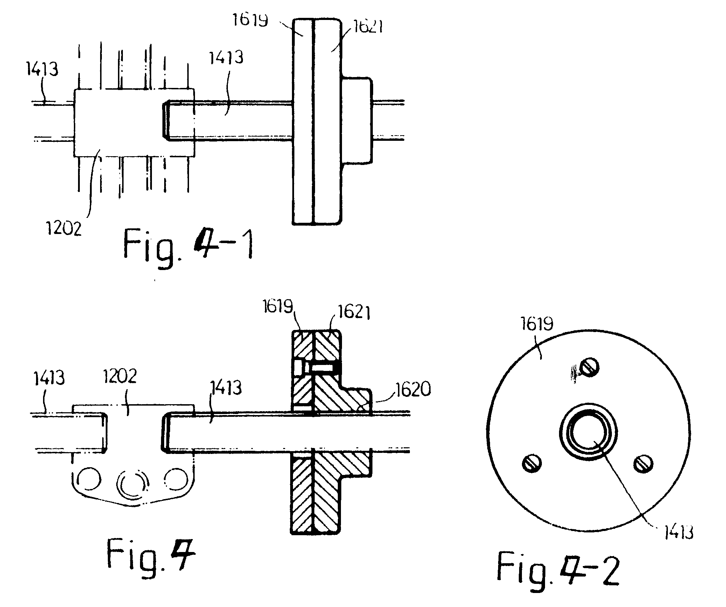

Figure 4 is a sectional view of a first variant of the clamping jaw;

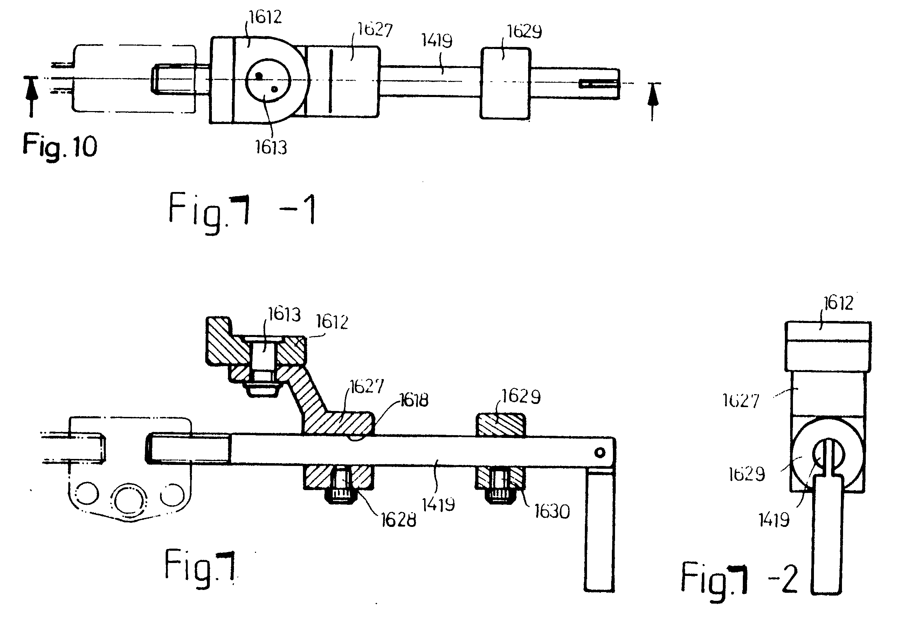

Figure 4-1 is a plan view of the clamping jaw of Figure 7;

Figure 4-2 is a view of the clamping jaw from the right of Figure 7;

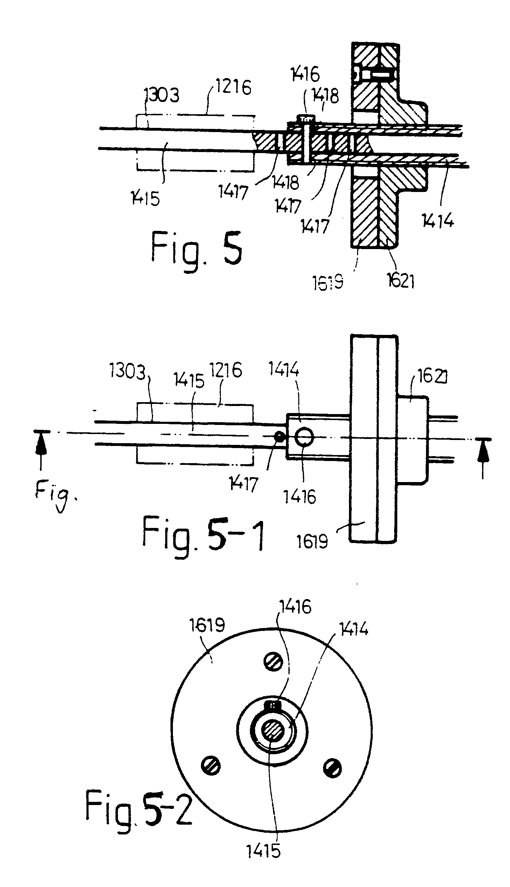

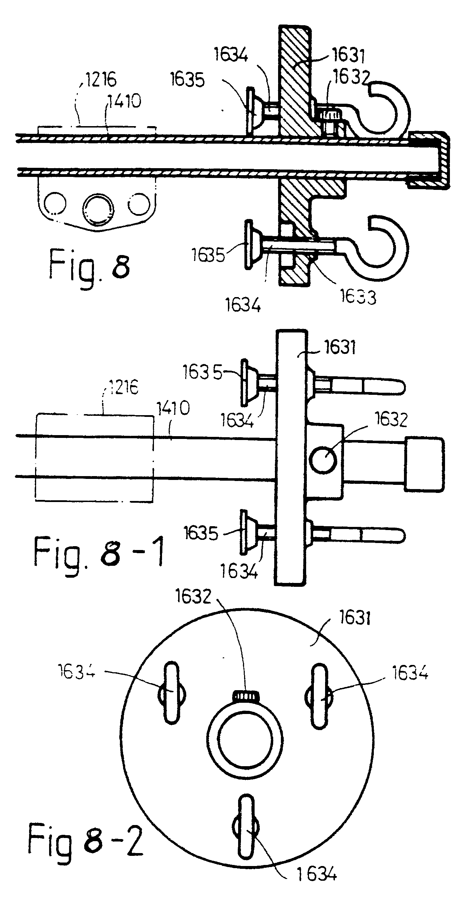

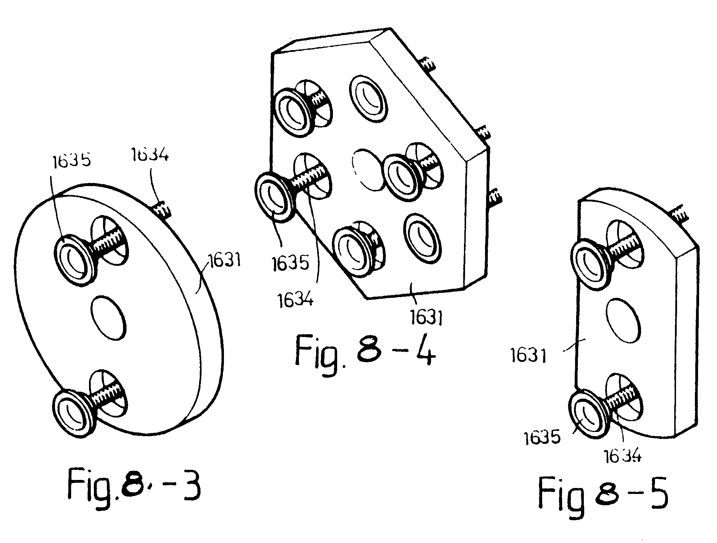

Figure 5 is a sectional view of a second variant clamping jaw along the line 8 of Figure 8-1;

Figure 5-1 is a plan view of the clamping jaw of Figure 8;

Figure 5-2 is a partially sectioned end view from the left of Figure 8;

Figure 6 is a sectional view of a third variant clamping jaw;

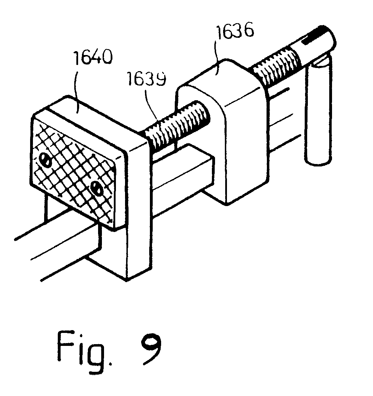

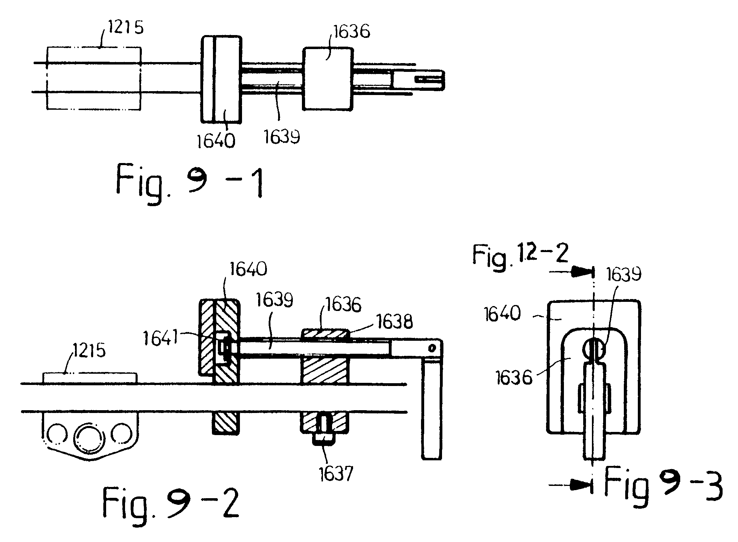

Figure 6-1 is a plan view of the clamping jaw of Figure 9;

Figure 6-2 is a view from the right of Figure 6-1;

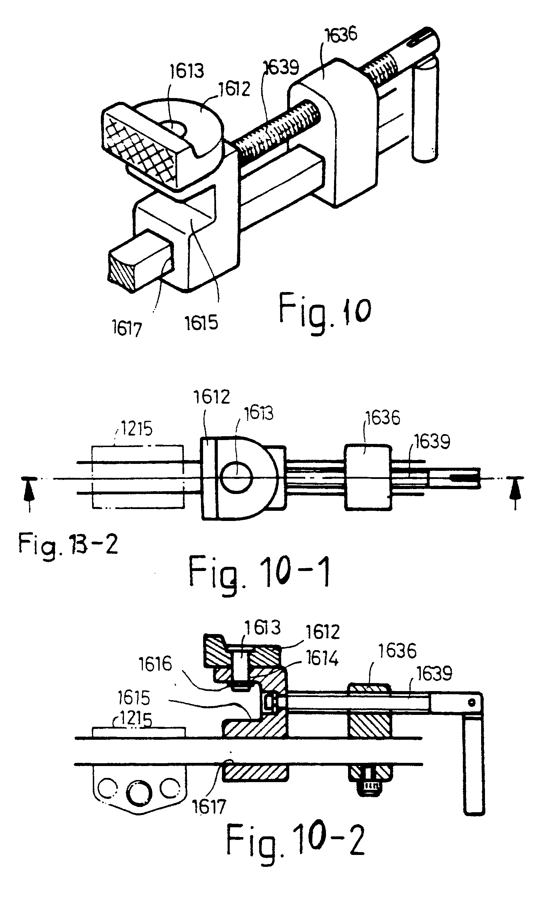

Figure 7 is a sectional view of a fourth variant clamping jaw along the line 10 of Figure 10-1;

Figure 7-1 is a plan view of the clamping jaw of Figure 10;

Figure 7-2 is a view from the right of Figure 10;

Figure 8 is a sectional view of a fifth variant clamping jaw;

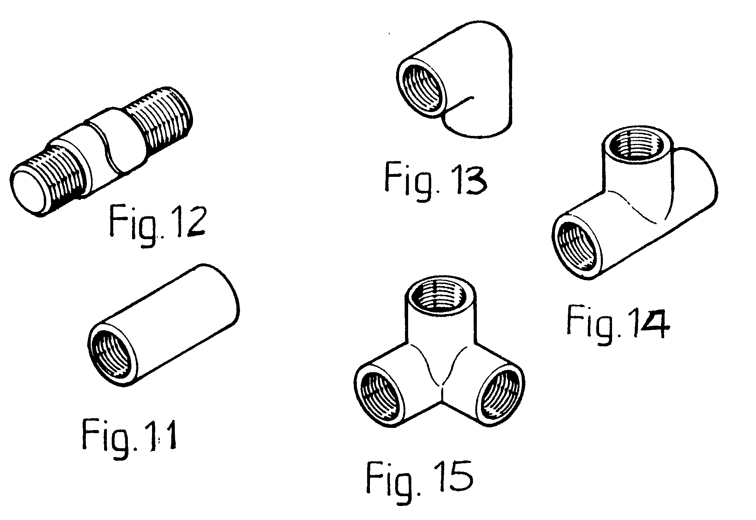

Figure 8-1 is a plan view of the clamping jaw of Figure 11;

Figure 8-2 is a view from the right of Figure 11;

Figures 8-3, 11-4 and 11-5 are perspective views of three alternative versions of the clamping jaw of Figure 11;

Figure 9 is a perspective view of a sixth variant clamping jaw;

Figure 9-1 is a plan view of the clamping jaw of Figure 12;

Figure 9-2 is a section of the jaw along the line 12-2 of Figure 12-3;

Figure 9-3 is a view from the right of Figure 12-2;

Figure 10 is a perspective view of a seventh variant clamping jaw which is a rotatable version of the jaw of Figure 9;

Figure 10-1 is a plan view of the clamping jaw of Figure 10;

Figure 10-2 is a sectional view along the line 13-2 of Figure 10-1;

Figures 11, 12, 13, 14 and 15 are perspective views of a parallel joint, an auxiliary support arm, an elbow joint, a first three-way joint, and a second three-way joint, respectively;

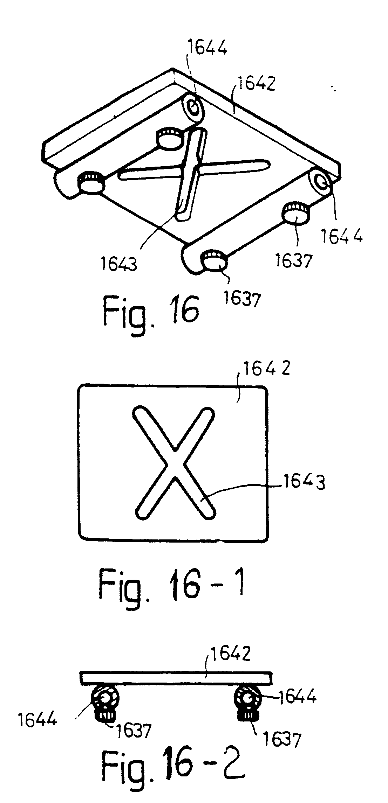

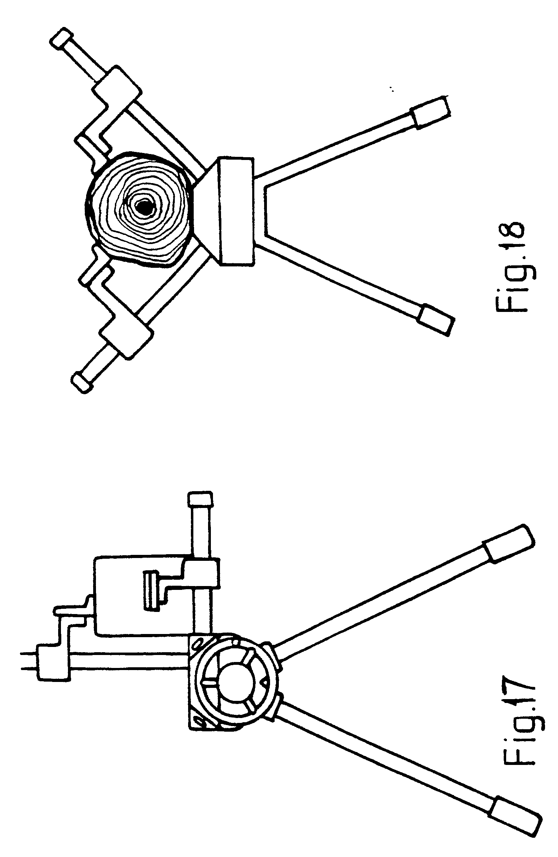

Figures 16, 16-1 and 16-2 are a perspective view, a plan view and a partially-sectioned end view, respectively, of an auxiliary support plate useable with the workbench of the invention, and Figure 17, 18 and 19 show examples of the modes of use of workbenches according to various embodiments of the invention illustrated in the preceding Figures.

With reference to the drawings, Figures 1, 1-1, 1-2 and 1-3 show a workbench comprising a support structure formed by front and rear connection blocks 1503, 1504 which have respective pairs of legs 1506 with feet 1507, and are connected by two tubular guide rails 1501. A multi-faceted fixed stock 1101 is provided on one side of the rear connection block 1504, and a multi-faceted movable stock 1201 is mounted on the tubular guide rails 1501 for movement relative to the fixed stock 1101. A drive screw 1502 for the movable stock 1201 extends between the connection blocks 1503, 1504 and passes through a correspondingly threaded hole in the movable stock 1201. The drive screw 1502 has a concave ring-shaped slot which cooperates with a positioning screw 1508 on the front connection block 1503 to enable the range of movement of the movable stock 1201 to be adjusted. The turning of a hand-wheel 1505 connected to the drive screw 1502 effects, by means of the drive screw 1502, the movement of the movable stock 1201 towards or away from the fixed stock 1101 along the guide rails 1501, within the limits set by the screw 1508.

Threaded holes or sockets 1301 provided at a number of angular orientations in the fixed stock 1101 and the movable stock 1201 are engageable by the threaded ends of support arms 1401 which carry respective rotatable clamping jaws 1601. The jaws 1601 can slide independently and axially along their support arms and can also effect reciprocating movements axially along the support arms. The arms 1401 have end stops 1403 for retaining the clamping jaws thereon.

In use, the workbench is set up by the engagement of the support arms 1401 in selected holes 1301 in the fixed and movable stocks 1101, 1201 in positions determined by the shape and size of the workpiece to be clamped. As a result, the support arms 1401 on each stock may be aligned horizontally with each other as shown in Figure 1, or they may be inclined relative to each other to form, for example, an L or V shape. The clamping jaws 1601 are then moved into appropriate positions and angular orientations on the support arms 1401, and the movable stock 1201 is moved into the appropriate clamping position relative to the fixed stock 1101. In this way, the workbench of the present invention enables the firm clamping of irregularly-shaped workpieces, for example, blocks, plates, rods, or spheres.

Figures 2-20, 2-21, 2-22 and 2-23 show a further embodiment of the workbench with a rotatable support arm structure. The movable stock comprises a hub member 1219 slidable on guide rails under the action of a guide screw, an inner annular support arm coupling member 1307 rotatable on the hub 1219, and an outer support arm coupling member 1317 rotatable on the hub relative to the inner member. The inner and outer members 1307, 1317 are retained on the hub 1219 by a threaded locking ring 1319. The inner and outer members 1307, 1317 have threaded seats 1318 engageable by respective support arms, the threading of the seats 1318 being shorter than the tdhreading of the arms so that the latter bear on the hub 1219 when they are screwed fully home and thus lock the arms in their chosen relative orientation obtained by the rotation of the members 1307, 1317.

From Figures 2-20 to 2-23, it will be appreciated that the fixed stock has a similar structure to the movable stock, the sole difference being that its hub member 1112 is, of course, fixed relative to the support structure.

Although commercially available clamping jaws can be used with the support arms of the workbenches of the invention, subject to modification to render them slidable on and lockable relative to the arms, various clamping jaws are provided by the present invention for particular applications or to increase the convenience and versatility of the workbench.

Figures 3, 3-1 and 3-2 show a clamping jaw arrangement having two jaws 1612, one on each side of a stock 1215. Each jaw 1612 is rotatable about a pivot pin 1613 on a respective base 1603, 1604 slidable on the support arm and lockable by means of a screw 1605. One jaw is provided with tightening means comprising a block 1611 slidable parallel to the arm on a guide rail 1610 of the base 1604 under the action of a guide screw 1606 with a handle 1607. The jaw 1612 itself is pivoted to an appendage 1609 of the block 1611 by its pin 1613 which engages a hole 1614 in the appendage.

The jaws 1612 can rotate relative to their bases 1603, 1604 into engagement with a workpiece, the locking screw 1605 enables adjustment of the bases along the support arm, and the guide screw 1606 enables the firm clamping of the workpiece. The shape of the holes in the bases 1603, 1604 can be varied in dependence on the arm profile employed, as shown in the preceding drawings.

Figures 4, 4-1 and 4-2 illustrate a rotatable disc-shaped clamping jaw 1621 useable with a circular support arm 1413 having rotational guide threads for the jaw. The jaw 1621 has a central thread hole 1620 and a friction plate 1619 on its active or frontal face. The jaw 1621 can move forwards and backwards along the support arm 1413 to clamp a workpiece.

Figures 5, 5-1 and 5-2 show a rotatable disc-shaped clamping jaw 1621 mounted on a retractable support arm whose inner section 1415 is engaged with a through-hole 1303 of a movable stock 1216 and has a number of positioning holes 1417. An outer section 1414 of the support arm, which has rotational guide threads for the jaw, is slidable on the inner section 1415 for longitudinal adjustments. A positioning pin 1416 is passed through one of the positioning holes 1417 and positioning pin hole 1418 in the outer section 1414, and then is screwed into the rotatable jaw 1621 on the outer section 1414 of the retractable support arm to clamp and hold a workpieces. The jaw 1621 is adjustable along the outer section 1414.

Figures 6, 6-1 and 6-1 and 6-2 show a disc-shaped clamping jaw 1625 with a positioning seat for coupling to a round or multi-faceted support arm. An annular friction plate 1625 is provided on the frontal face of the jaw 1625 and the latter has a central hole so that it can slide on a cylindrical sleeve 1622. One end of the sleeve 1622 has an outer slide surface and its other end is threaded and has an opening. A handle 1624 is screwed onto the threaded section of the sleeve 1622 and a nut 1623 is screwed onto the sleeve at its open end. The sleeve 1622 is fitted onto the support arm 1401 and is adjustable therealong. The tightening of the nut 1623 firmly locks the sleeve 1622 to the support arm 1401, while rotation of the handle 1624 drives the jaw 1625 to clamp and hold a workpiece.

Figures 7, 7-1 and 7-2 show a clamping jaw 1612 with a positioning block for coupling to a round support arm 1419. The jaw 1612 is pivoted about a pin 1613 on slidable base member 1627 with a slide hole 1618 and a fixing screw 1628. An adjustable locking block 1629 is coupled to the support arm inwardly or outwardly of the jaw and has a fixing screw 1630. The block 1629 fixes the jaw in position on the support arm. The support arm has a longer thread than usual, which is screwed into a threaded hole in the said jaw, and the arm has a handle at its outer end for rotation. When a user wants to clamp a workpiece he firstly loosens the fixing screw 1628 of the slidable jaw 1612, 1627 to push the jaw towards the workpiece, and he then loosens the fixing screw 1630 of the adjustable locking block 1629 and pushes it against the base member 1627 before firmly relocking the fixing screw 1630. When the handle is turned to rotate the support arm, the arm urges the locking block 1629 against the member 1627 to clamp and hold the workpiece. If the user wants the jaw to be urged outwardly, he places the locking block 1629 inwardly of the member 1627.

Figures 8, 8-1 and 8-2 illustrate a disc-shaped clamping jaw with multiple sets of separate drive clamp blocks 1635, for coupling to a round support arm 1410. The jaw 1631 has a central hole by which it is fitted slidably onto the support arm 1410, and a lateral screw 1632 for locking it in position on the arm. A screw hole 1633 passes through the disc to accommodate the drive handle 1634 of a movable clamp block 1635 provided at the inner end of the handle 1634. Each block is movable independently by its handle. When the user wishes to use the jaw 1631 to clamp a workpiece he firstly loosens the screw 1633, pushes the disc-shaped jaw 1631 towards the workpiece, tightens the screw 1633, and then turns each handle 1634 to clamp the workpiece.

Figure 8-3 shows a disc-shaped clamping jaw with two separate drive blocks, Figure 8-4 snows a disc-shaped clamping jaw with six separate drive blocks, and Figure 11-5 shows a rectangular clamping jaw with the two separate drive blocks.

Figure 9, 9-1, 9-2 and 9-3 illustrate a clamping jaw 1640 with a stabilization hole. A locking block 1636 of the jaw has a hole for its fitting onto a support arm, and a threaded hole 1638 parallel to the support arm for accommodating a guide screw 1639 with a handle at its outer end. The jaw is slidable on the support arm and has a central countersunk hole in which one end of the guide screw 1639, provided with a buckle ring 1641, is captive. The screw 1639 reacts against the block 1636 which is clamped on the support arm by a locking screw 1637.

Figures 10, 10-1 and 10-2 illustrate a rotatable jaw similar to that of Figures 9 to 9-3. In this case, the jaw 1612 itself is pivoted about a pin 1613 on a base member 1615 slidable on the support arm 1617 in the manner of the jaw described above.

The support arms can be provided with multi-direction joints, connection pipes, or other auxiliary components. Examples of these auxiliary components are described briefly below.

Figure 11 shows a parallel joint useable with an auxiliary support arm as shown in Figure 12 to extend a support arm or to connect two workbenches alongside each other.

Figure 13 shows an elbow joint useable with the aforesaid auxiliary support arm to form a cranked support arm.

Figures 14 and 15 show three-way joints which can further extend a support arm to set up a plurality of clamps for workpieces. A number of such joints can be combined according to a user's needs.

Figures 16, 16-1 and 16-2 show a support plate 1642 with an X-shaped locking slot 1643 and two parallel sockets 1644 on its underside. The sockets 1644 are fitted onto respective support arms and fixed by locking screws 1637. The plate 1642 can be used with drills jig-saws and the like for working a clamped workpiece.

**Claims**

1. A workbench for holding a workpiece, said workbench comprising a frame including guide rail means (1501), leg means (1506), two stocks (1101, 1201) having a plurality of faces, whereby there is no plane which is at the same time normal to the planes defined by those faces and carried on the guide rail means, and means (1502) for displacing a movable one of said stocks towards and away from the other of said stocks, each stock having a socket or threaded hole (1301) formed on each of said faces and an elongate support rod (1401, 1404) removably secured in said socket or threaded hole whereby each support rod extends outwardly from a respective stock and whereby the elongate support rods can be disposed in a variety of positions relative to each other, the elongate support rods carry clamping block means (1601) which are slidably adjustable thereon and which can be secured in a desired adjusted position on the elongate support rods by changing means, whereby, one of said stocks (1101) is fixed and has a plurality of such sockets or threaded holes (1301) which are oriented transversely to one another and which can carry a plurality of such elongate support rods (1401, 1404) extending transversely to one another from said stock (1101).

2. A workbench for holding a workpiece, said workbench comprising a frame including guide rail means (1501), leg means (1506), two stocks (1101, 1201) having a plurality of faces, carried on the guide rail means, and means (1502) for displacing a movable one of said stocks towards and away from the other of said stocks, each stock having a socket or threaded hole (1301) and an elongate support rod (1401, 1404) removably secured in said socket or threaded hole whereby each support rod extends outwardly from a respective stock and whereby the elongate support rods can be disposed in a variety of positions relative to each other, the elongate support rods carry clamping block means (1601) which are slidably adjustable thereon and which can be secured in a desired adjusted position on the elongate support rods by changing means; whereby one of said stocks is fixed and whereby each stock comprises a hub portion (1219) having a socket or threaded hole (1318) formed therein and carrying a rotatable portion (1317) having a further socket or threaded hole formed therein, the hub portion being slidable along said guide rail means (1501) and said rotatable portion being rotatable about an axis parallel to the solid guide rail means to enable the relative orientations of elongate support rods carried in said sockets or threaded holes to be varied.

3. A workbench according to claim 1 whereby at least one stock has a chamfered face and two opposite parallel faces, each face having a socket or threaded hole (1301) formed therein and each force having an associated elongate support rod (1401, 1404) adapted to be removably mounted in a respective recess whereby the respective rods may be disposed parallel or transversely to each other.

4. A workbench according to any preceding claim whereby each clamping block includes a pair of clamps, screw threaded means carried by at least one clamp for moving the clamps toward and away from each other in a direction parallel to the rod whereby variously shaped workpieces can be clamped within the workbench.

5. A workbench according to any preceding claim whereby the guide rail means (1501) comprises two horizontally-disposed parallel guide rods and in that the means (1502), for displacing the movable stock includes a threaded rod (1502) and a crank handle by an end portion (1503) of the frame.

6. A workbench according to any of claims 1,3,4 or 5 wherein each of said stocks (1101, 1201) has a plurality of such sockets or threaded holes (1301) which are oriented transversely to one another and which can carry a plurality of such elongate support rods (1401, 1404).

## Revendications

1. Etabli pour tenir une pièce à travailler, ledit établi comprenant une ossature comportant des rails de guidage (1501), des pieds (1506), deux poupées (1101, 1201) présentant une pluralité de faces, de sorte qu'il n'existe pas de plan qui soit en même temps normal aux plans définis par ces faces, et portées sur les rails de guidage, et des moyens (1502) pour rapprocher et éloigner une desdites poupées, ou poupée mobile, de l'autre desdites poupées, chaque poupée comportant un emboîtement ou trou taraudé (1301) ménagé dans chacune desdites faces et un bras support allongé (1401,1404) fixé de façon démontable dans ledit emboîtement ou trou taraudé de sorte que chaque bras support s'étend vers l'extérieur à partir d'une poupée respective et de sorte que les bras supports allongés peuvent être disposés dans diverses positions les uns par rapport aux autres, les bras supports allongés portent des blocs de serrage (1601) qui sont réglables de façon coulissante sur les bras et qui peuvent être fixés dans une position réglée désirée sur les bras supports allongés par des moyens de réglage, dans lequel une desdites poupées (1101) est fixe et comporte une pluralité de tels emboîtements ou trous taraudés (1301) qui sont orientés transversalement les uns par rapport aux autres et qui peuvent porter une pluralité de tels bras supports allongés (1401,1404) s'étendant transversalement les uns par rapport aux autres à partir de ladite poupée (1101).

2. Etabli pour tenir une pièce, ledit établi comprenant une ossature comportant des rails de guidage (1501), des pieds (1506), deux poupées (1101,1201) présentant une pluralité de faces et portées sur les rails de guidage, et des moyens (1502) pour rapprocher et éloigner une desdites poupées, ou poupée mobile, de l'autre desdites poupées, chaque poupée comportant un emboîtement ou trou taraudé (1301) et un bras support allongé (1401, 1404) fixé de façon démontable dans ledit emboîtement ou trou taraudé, de sorte que chaque bras support s'étend vers l'extérieur à partir d'une poupée respective et de sorte que les bras supports allongés peuvent être disposés dans diverses positions les uns par rapport aux autres, les bras supports allongés portent des blocs de serrage (1601) qui sont réglables de façon coulissante sur les bras et qui peuvent être fixés dans une position réglée désirée sur les bras supports allongés par des moyens de réglage ; dans lequel une desdites poupées est fixe et chaque poupée comprend un moyeu (1219) dans lequel est prévu un emboîtement ou trou taraudé (1318) et qui porte une partie tournante (1317) dans laquelle est prévu un autre emboîtement ou trou taraudé, le moyeu pouvant coulisser le long desdits rails de guidage (1501) et ladite partie tournante pouvant tourner autour d'un axe parallèle aux rails de guidage effectifs pour permettre de faire varier les orientations relatives des bras supports allongés portés dans lesdits emboîtements ou trous taraudés.

3. Etabli suivant la revendication 1, dans lequel au moins une poupée présente une face biseautée et deux faces parallèles opposées, chaque face comportant un emboîtement ou trou taraudé (1301) et chaque face portant un bras support allongé associé (1401,1404) qui peut être monté de façon amovible dans un emboîtement respectif, de sorte que les bras respectifs peuvent être disposés parallèlement ou transversalement les uns aux autres.

4. Etabli suivant l'une quelconque des revendications précédentes, dans lequel chaque bloc de serrage comprend deux éléments de serrage, et des moyens filetés portés par au moins un élément de serrage pour rapprocher et éloigner les éléments de serrage l'un de l'autre dans une direction parallèle au bras, de sorte que des pièces de diverses formes peuvent être tenues dans l'établi.

5. Etabli suivant l'une quelconque des revendications précédentes, dans lequel les rails de guidage (1501) comprennent deux tiges de guidage parallèles horizontales, et dans lequel les moyens (1502) de déplacement de la poupée mobile comprennent une tige filetée (1502) et une manivelle montée à une partie d'extrémité (1503) de l'ossature.

6. Etabli suivant l'une quelconque des revendications 1, 3 , 4 ou 5, dans lequel chacune des dites poupées (1101,1201) comporte une pluralité de tels emboîtements ou trous taraudés (1301) qui sont orientés transversalement les uns par rapport aux autres et qui peuvent porter une pluralité de tels bras supports allongés (1401,1404).

**Patentansprüche**

1. Werkbank zur Halterung eines Werkstücks mit einem Rahmen, der Führungsschienen (1501), Beine (1506), zwei Böcke (1101, 1201) mit einer Vielzahl Flächen, deretwegen keine Ebene existiert, die gleichzeitig normal zu den durch diese Flächen gebildeten Ebenen orientiert ist, wobei die Böcke auf den Führungsschienen gehaltert sind, und einer Einrichtung (1502) zur Versetzung eines beweglichen der beiden Böcke in Richtung auf den anderen der beiden Böcke zu und von diesem weg, wobei jeder Bock eine Buchse oder Gewindebohrung (1301) aufweist, die auf jeder seiner Flächen ausgestaltet ist, und wobei eine längliche Tragstange (1401, 1404) lösbar in der Buchse oder Gewindebohrung befestigt ist, wodurch jede Tragstange sich von einem zugeordneten Bock nach außen erstreckt und wobei die länglichen Tragstangen in einer Vielzahl Stellungen relativ zueinander angeordnet werden können, wobei die länglichen Tragstangen Klemmblöcke (1601) haltern, die verschieblich auf ihnen einstellbar sind und die in einer gewünschten eingestellten Stellung auf den länglichen Tragstangen durch eine Wechseleinrichtung befestigt werden können, wobei einer der Böcke (1101) befestigt ist und eine Vielzahl derartiger Buchsen oder Gewindebohrungen (1301) aufweist, die schräg zueinander angeordnet sind und die eine Vielzahl derartiger länglicher Tragstangen (1401, 1404) haltern können, welche sich schräg zueinander von dem Bock (1101) weg erstrecken.

2. Werkbank zur Halterung eines Werkstücks mit einem Rahmen, der Führungsschienen (1501), Beine (1506), zwei Böcke (1101, 1201) mit einer Vielzahl Flächen, welche Böcke auf den Führungsschienen gehaltert sind, und einer Einrichtung (1502) zur Versetzung eines beweglichen der beiden Böcke in Richtung auf den anderen der Böcke zu und von diesem weg, wobei jeder Bock eine Buchse oder Gewindebohrung (1301) und eine längliche Tragstange (1401, 1404) aufweist, die herausnehmbar in der Buchse oder Gewindebohrung befestigt ist, wodurch jede Tragstange sich von einem zugeordneten Bock nach außen erstreckt und wodurch die länglichen Tragstangen in einer Vielzahl Stellungen relativ zueinander angeordnet werden können, wobei die länglichen Tragstangen Klemmblöcke (1601) haltern, die verschieblich auf ihnen einstellbar sind und die in den gewünschten eingestellten Stellungen auf den länglichen Tragstangen mittels Wechselvorrichtungen befestigt werden können, wobei einer der Böcke fixiert ist und wobei jeder Bock einen mit einer in ihm ausgebildeten Buchse oder Gewindebohrung (1318) versehenen Nabenabschnitt (1219) und einen drehbaren Abschnitt (1317) aufweist, in dem eine weitere Buchse oder Gewindebohrung geformt ist, wobei der Nabenabschnitt längs der Führungsschiene (1501) verschieblich und der drehbare Abschnitt um eine zu der festen Führungsschiene parallelen Achse drehbar ist, um die relative Anordnung in den Buchsen oder Gewindebohrungen aufgenommener länglicher Tragstangen variierbar zu machen.

3. Werkbank nach Anspruch 1, wobei zumindest ein Bock eine abgeschrägte Fläche und zwei entgegengesetzte parallele Flächen aufweist, wobei jede Fläche eine in ihr ausgebildete Buchse oder Gewindebohrung (1301) und eine zugeordnete längliche Tragstange (1401, 1404) aufweist, die herausnehmbar in einer zugeordneten Ausnehmung montiert ist, wodurch die jeweiligen Tragstangen parallel oder schräg zueinander angeordnet werden können.

4. Werkbank nach einem der vorangehenden Ansprüche, wobei jeder Klemmblock ein Paar Klemmen und eine Schraubgewindeeinrichtung aufweist, die durch zumindest eine Klemme gehalten ist, um die Klemmen in einer zur Tragstange parallelen Richtung aufeinander zu und voneinander weg zu bewegen, wodurch unterschiedlich geformte Werkstücke innerhalb der Werkbank eingeklemmt werden können.

5. Werkbank nach einem der vorangehenden Ansprüche, wobei die Führungsschienen (1501) zwei in Horizontalrichtung angeordnete parallele Führungsstangen aufweisen und wodurch die Einrichtung zur Versetzung des bewegbaren Bocks ein Gewinderohr (1502) und eine Kurbelhandhabe, die an einem Endabschnitt des Rahmens angeordnet ist, aufweisen.

6. Werkbank nach einem der Ansprüche 1, 3, 4 oder 5, wobei jeder Bock (1101, 1201) eine Vielzahl derartiger Buchsen oder Gewindebohrungen (1301) aufweist, die schräg zueinander angeordnet sind und eine Vielzahl derartiger länglicher Tragstangen (1401, 1404) haltern können.

Fig. 1

Fig. 1-1

Fig. 1-2

Fig. 1-3

Fig. 2-20

Fig. 2-21

Fig. 2-22

Fig. 2-23

Fig. 3

Fig. 3-1

Fig. 3-2

Fig. 6

Fig. 4-2

Fig. 4-1

Fig. 4

Fig. 5

Fig. 5-1

Fig. 5-2

Fig. 6

Fig. 6-1

Fig. 6-2

Fig.7 -2

Fig.7 -1

Fig.10

Fig.7

Fig. 8

Fig. 8 - 1

Fig 8 - 2

Fig. 8·-3

Fig. 8-4

Fig 8-5

EP 0 235 415 B1

Fig. 9

EP 0 235 415 B1

1215

1636

1640    1639

Fig. 9 - 1

1640

1641    1639    1636    1638

1215

1637

Fig. 9 -2

Fig. 12-2

1640

1636

1639

Fig 9 -3

1636

1613    1639

1612

1617    1615

Fig. 10

1612    1613

1215    1636

1639

Fig. 13-2

Fig. 10-1

1613    1612

1616    1614

1636

1615    1639

1215

1617

Fig. 10-2

Fig. 14

Fig. 13

Fig. 15

Fig. 12

Fig. 11

Fig. 16

Fig. 16 - 1

Fig. 16 - 2

Fig.18

Fig.17

Fig. 19